# FASCICULE DE BREVET EUROPEEN

(11) **EP 3 394 117 B1**
(45) Date de publication et mention de la délivrance du brevet: **19.08.2020**
(21) Numéro de dépôt: 16819977.6
(22) Date de dépôt: 05.12.2016
(51) Int. Cl.: C08F 8/40, C08C 19/24, C08C 19/38, C08G 18/69, C08G 18/71, B60C 1/00

(54) **PROCEDE DE SYNTHESE D'UN POLYMERE PORTEUR D'AU MOINS UN GROUPE PHOSPHONATE, POLYMERE ISSU DE CE PROCEDE ET COMPOSITION LE CONTENANT**
VERFAHREN ZUR HERSTALLUNG EINES POLYMERS ENTHALTEND MINDESTENS EINE PHOSPHONATE GRUPPE, DARAUS HERGESTELLTES POLYMER UND ZUSAMMENSETZUNG DIESE ENTHALTEND
PROCESS FOR PREPARING A POLYMER CONTAINING AT LEAST ONE PHOSPHONATE GROUP, POLYMER OBTAINED THEREFROM AND COMPOSITION CONTAINING THE SAME

(30) Priorité: 21.12.2015 FR 1562885
(43) Date de publication de la demande: 31.10.2018
(73) Titulaire: Compagnie Générale des Etablissements Michelin, 63000 Clermont-Ferrand (FR)
(72) Inventeur: MATMOUR, Rachid, 63040 Clermont-Ferrand Cedex 9 (FR); CHATARD, Camille, 34160 Castries (FR); LOUBAT, Cédric, 34160 Castries (FR)
(74) Mandataire: Le Cam, Véronique Marie Christine
(86) Numéro de dépôt international: PCT/FR2016/053210
(87) Numéro de publication internationale: WO 2017/109316

(56) Documents cités:
- FR-A1- 3 017 387
- FR-A1- 3 017 388
- MOHAMED ESSAHLI ET AL: "Phosphonic acid functionalized polyethylene glycol and derivatives", JOURNAL OF APPLIED POLYMER SCIENCE, vol. 108, no. 1, 1 janvier 2008 (2008-01-01), pages 483-490, XP55356665, US ISSN: 0021-8995, DOI: 10.1002/app.27295
- BOUTEVIN B ET AL: "Please translate title", EUROPEAN POLYMER JOURNAL, PERGAMON PRESS LTD. OXFORD, GB, vol. 33, no. 3, 1 mars 1997 (1997-03-01), pages 263-271, XP004080760, ISSN: 0014-3057, DOI: 10.1016/S0014-3057(96)00170-X

## Description

La présente invention concerne des polymères, en particulier des élastomères, porteurs d'au moins un groupe phosphonate ainsi que leur procédé de préparation. La présente invention concerne également les compositions de caoutchouc contenant de tels polymères en vue notamment d'une amélioration de la dispersion des charges au sein des polymères.

Dans le domaine de la fabrication des pneumatiques et en particulier de la formulation des compositions de caoutchouc en contact avec le sol, appelées bandes de roulement, on recherche en permanence des moyens pour améliorer la dispersion des charges au sein des polymères et ainsi améliorer les propriétés de renforcement de la composition de caoutchouc les contenant. L'un des moyens pour parvenir à ce résultat est l'utilisation d'agents de couplage capables d'établir des interactions entre le polymère et la charge. Un autre moyen pour y parvenir est d'utiliser des polymères dont la structure est modifiée dans le but d'obtenir une bonne interaction entre le polymère ainsi modifié et la charge, qu'il s'agisse du noir de carbone ou d'une autre charge inorganique renforçante.

La modification de la structure des polymères peut se faire par introduction d'une fonction réactive vis-à-vis de la charge, à tout moment de sa synthèse par divers moyens connus. Ainsi, la fonction peut être introduite dans la structure du polymère au moment de l'amorçage d'une polymérisation anionique, lorsque l'amorceur de polymérisation est porteur de cette fonction. La fonction sera portée en extrémité de chaîne à l'issue de la synthèse. La fonction peut également être introduite en extrémité de chaîne d'un polymère par réaction d'un polymère vivant avec un agent de fonctionnalisation. La fonction peut également être portée par un des monomères polymérisés.

Ce sont ces approches de modification auxquelles se sont intéressés de nombreux auteurs et la littérature est abondante sur ces sujets, notamment pour les polymères porteurs de groupes phosphonate.

En effet, les polymères porteurs de groupes phosphonate ont récemment acquis un intérêt croissant en raison de leur utilité dans une large gamme d'applications comme par exemple les piles à combustible, les membranes électrolytes (membranes échangeuses de cation), les retardateurs de flamme, les additifs pour revêtement, les biomatériaux, en particulier en applications orthopédiques, la solubilisation de médicaments, par exemple hydrogels pour la libération de médicaments, les promoteurs de prolifération cellulaire, les agents d'inhibition de la corrosion dans les systèmes de refroidissement, les compositions pour pneumatiques pour améliorer les interactions entre la gomme et les charges.

Ainsi, parmi les approches de modification en vue d'obtenir des polymères porteurs de groupes phosphonate, on peut citer par exemple la copolymérisation radicalaire d'un diène et de vinyl phosphonate (Journal of Polymer Science (1952), 8, pp 255-6 ; demande FR 1403732). Toutefois, les auteurs rapportent des difficultés pour introduire le monomère phosphonate dans la chaîne de polymère.

Il est aussi connu d'introduire des groupes phosphonate en bout de chaîne par désactivation de chaînes anioniques vivantes par des composés dialkyle chlorophosphate, dialkyl chlorothiophosphate, oxyhalogénure de phosphore ou encore thiohalogénure de phosphore (European Polymer Journal, Volume 17 Issue 4, pp 407-11, 1981). Toutefois, pour limiter les réactions secondaires, il est nécessaire d'effectuer les réactions à des températures allant de -60°C à -80°C, qui sont difficilement conciliable dans un procédé industriel.

On peut également citer les procédés qui nécessitent deux étapes : une polymérisation puis une post-modification. La modification post-polymérisation peut par exemple être une hydrophosphorylation (Advanced Synthesis & Catalysis (2008), 350, (3), pp 431-438), une addition radicalaire de HS-(CH₂)₃-PO(OC₂H₅)₂ (Polym. Bull. 1998, 41, pp 145-151), une addition de phosphonate d'éthyle HPO(OEt)₂ sur les insaturations carbone-carbone d'un polybutadiène (European Polymer Journal, Volume 19 Issue 12 pp 1159-65, 1983). Toutefois, ces procédés présentent un ou plusieurs inconvénients comme, par exemple, d'utiliser des catalyseurs coûteux, de présenter des réactions parasites de réticulation ou bien de ne fonctionner que sur un certain type de polymères tels que, par exemple, les polymères diéniques riches en fonction 1,2.

Un but de la présente invention est de proposer un nouveau procédé de synthèse d'un polymère, notamment d'un élastomère, porteur d'au moins un groupe phosphonate dans la chaîne polymère, notamment à au moins une de ces extrémités, qui soit simple et peu coûteux, qui comprenne un nombre limité d'étapes réactionnelles et qui ne dépende pas de la structure du polymère.

Cet objectif est atteint par l'utilisation d'un polymère de départ porteur d'au moins une fonction nucléophile dans la chaîne polymère et d'un composé électrophile porteur à la fois d'un groupe phosphonate et d'une fonction électrophile.

Le procédé de synthèse conforme à l'invention est un procédé plus simple à mettre en œuvre que les procédés de l'art antérieur. De manière avantageuse, il est moins coûteux car il ne nécessite pas la présence de catalyseur. En outre, il ne fait pas appel à des agents amorceurs ou des agents de terminaison de polymérisation, ni à des agents de protection / déprotection. Il permet d'obtenir également des rendements élevés de modification du polymère et de contrôler le taux de groupes phosphonate introduits, notamment en bout de chaîne. Par ailleurs, le procédé présente l'avantage d'être industrialisable.

### I - DESCRIPTION DETAILLEE DE L'INVENTION :

Dans la présente description, tout intervalle de valeurs désigné par l'expression « entre a et b » représente le domaine de valeurs allant de plus de « a» à moins de « b » (c'est-à-dire bornes a et b exclues) tandis que tout intervalle de valeurs désigné par l'expression « de a à b » signifie le domaine de valeurs allant de « a » jusqu'à « b" » (c'est-à-dire incluant les bornes strictes a et b).

Par « au moins un groupe », « au moins un groupement », « au moins une fonction », on entend respectivement, un ou plusieurs groupe(s), un ou plusieurs groupement(s), une ou plusieurs fonction(s).

Un premier objet de la présente invention est un procédé de synthèse d'un polymère portant au moins un groupe phosphonate dans la chaîne polymère, ledit procédé comprenant au moins la réaction d'un polymère de départ porteur d'au moins d'une fonction nucléophile dans la chaîne polymère avec au moins un composé électrophile porteur à la fois d'un groupe phosphonate et d'une fonction électrophile, ladite fonction électrophile étant choisie parmi la fonction halogénure, la fonction halogénure d'acyle, la fonction ester, la fonction acide carboxylique et la fonction isocyanate.

L'invention concerne également une composition de caoutchouc à base d'au moins une charge renforçante et au moins un polymère portant au moins un groupe phosphonate dans la chaîne polymère et susceptible d'être obtenu selon le procédé défini ci-dessus.

Un autre objet de la présente invention concerne un article semi-fini comprenant au moins une composition de caoutchouc réticulable ou réticulée telle que définie ci-dessus.

Un objet de la présente invention concerne également un pneumatique comprenant au moins un article semi-fini tel que défini ci-dessus.

Dans la suite de l'exposé de l'invention, la dénomination « polymère de départ » désigne une ou plusieurs macromolécule(s) portant au moins une fonction nucléophile dans la chaîne polymère et utile(s) aux besoins du procédé de synthèse conforme à l'invention.

Le polymère de départ est porteur d'au moins une fonction nucléophile dans la chaîne polymère.

Par « fonction nucléophile », on entend une entité riche en électrons qui présente une affinité pour toute fonction appauvrie en électrons. Par exemple, une fonction nucléophile est une fonction chargée négativement ou possédant un doublet électronique libre. Une fonction nucléophile réagit en donnant des électrons à des composés électrophiles pour former une liaison covalente.

Par « chaîne polymère », on entend une chaîne linéaire d'une macromolécule sur laquelle toutes les autres chaînes longues ou courtes seront considérées comme pendantes, c'est-à-dire que la chaîne linéaire forme le squelette de la macromolécule à laquelle sont reliées par un seul point les chaînes pendantes (chaînes longues ou courtes).

Par « groupe Y dans la chaîne polymère », on entend que le groupe Y peut être un groupe Y terminal ou un groupe Y pendant. Un groupe Y terminal est un groupe localisé à une extrémité d'une macromolécule, c'est-à-dire qu'il n'est lié qu'à une seule unité monomère. Un groupe Y pendant est un groupe qui est localisé le long de la chaîne de la macromolécule. Par exemple, un groupe Y pendant peut être un substituant d'une unité monomère.

Par « fonction Y dans la chaîne polymère », on entend que la fonction Y peut être une fonction Y terminale ou une fonction Y pendante. Une fonction Y terminale est une fonction localisée à une extrémité d'une macromolécule, c'est-à-dire qu'elle n'est liée qu'à une seule unité monomère. Une fonction pendante est une fonction qui est localisée le long de la chaîne de la macromolécule. Par exemple, une fonction Y pendante peut être substituant d'une unité monomère.

Ainsi, le polymère de départ peut porter, par exemple, une ou plusieurs fonction(s) nucléophile(s) répartie(s) le long de la chaîne polymère ou bien le polymère de départ peut porter une fonction nucléophile à au moins une extrémité de la chaîne polymère.

Le polymère de départ peut aussi porter une ou plusieurs fonction(s) nucléophile(s) répartie(s) le long de la chaîne polymère et une fonction nucléophile à au moins une extrémité de la chaîne polymère.

Selon l'un quelconque des modes de réalisation de l'invention, le polymère de départ peut être un élastomère, un polymère liquide ou un polymère thermoplastique. De manière préférée, le polymère de départ est un élastomère.

Dans la présente demande, on entend par « polymère liquide », un polymère qui à une température ambiante (23°C) prend la forme du récipient qui le contient mais dont le volume est déterminé.

Selon l'un quelconque des modes de réalisation de l'invention, le polymère de départ, est un polymère obtenu par polymérisation d'au moins un monomère oléfinique. Le polymère de départ peut être un homopolymère d'un monomère oléfinique ou un copolymère obtenu par polymérisation d'au moins un premier monomère oléfinique et d'au moins un second monomère oléfinique de structure différente du premier monomère.

Par « monomère oléfinique », on entend une unité monomère comprenant au moins une double liaison carbone-carbone - C=C- . Un monomère oléfinique peut comprendre des atomes de carbone et d'hydrogène et éventuellement un ou plusieurs hétéroatomes.

Le monomère oléfinique selon l'invention peut être d'origine fossile ou peut être biosourcé. Dans ce dernier cas, il peut être, partiellement ou totalement, issu de la biomasse ou obtenu à partir de matières premières renouvelables issues de la biomasse.

On peut citer comme monomère oléfiniques à titre d'exemples non-exclusifs :
- l'éthylène,
- les monomères α-oléfines tels que le propylène, le 1-butène, l'isobutylène, le pentène, le méthylpentène, le 1-hexène, etc...,
- les monomères diéniques conjugués ou non,
- les monomères diéniques fluorés,
- les monomères vinyliques tels que les vinyles aromatiques ayant de 8 à 20 atomes de carbone, comme par exemple le styrène, l'ortho-, méta-, para-méthylstyrène, le mélange commercial vinylmésitylène, le divinylbenzène, le vinylnaphtalène ainsi que les vinyle pyridines, les vinyle N-C1-C6-alkylepyrroles, les vinyle oxazoles, les vinyle thiazoles, les vinyle pyrimidines, les vinyle imidazoles, etc.,
- les esters acryliques dérivés de l'acide acrylique ou de l'acide méthacrylique avec des alcools ayant 1 à 20 atomes de carbone, de préférence ayant de 1 à 12 atomes de carbone, comme par exemple l'acide acrylique, l'acrylamide, l'acrylate de méthyle, l'acrylate d'éthyle, l'acrylate de propyle, l'acrylate de n-butyle, l'acrylate d'iso-butyle, l'acrylate d'hexyle, l'acrylate de 2-éthylhexyle, l'acide méthacrylique, le méthacrylamide, le méthacrylate de méthyle, le méthacrylate d'éthyle, le méthacrylate de n-butyle, le méthacrylate de n-butyle le méthacrylate d'hexyle, le méthacrylate de 2-éthylhexyle),
- les esters acryliques porteurs d'un cycle époxy tels que les esters de glycidyle d'un acide acrylique ou d'un acide méthacrylique, notamment le méthacrylate de glycidyle, l'acrylate de glycidyle, l'itaconate de glycidiyle,
- les esters vinyliques d'acides carboxyliques,
- les nitriles vinyliques, tels que l'acrylonitrile et le méthacrylonitrile,
- les cyanoacrylates d'esters d'alcool en C1-C6,
- les vinyle cétones (vinyle méthyle cétone, ...),
- les vinyle phényle cétones,
- l'acétate de vinyle,
- les vinyle acétals,
- les éthers vinyliques (vinyle méthyle éther, vinyle éthyle éther, vinyle isobutyle éther, etc...),
- les alcools vinyliques,
- les vinyle halogénés (chlorure de vinyle, chlorure de vinylidène, tétrafluoroéthylène, fluorure de vinyle, fluorure de vinylidène, éthylène tétrafluoroéthylène, perfluoroalkoxy, etc...),
- les monomères comprenant du silicium tels que les silanes, les siloxanes (diméthylsiloxane, méthylhydroxysiloxane, diphénylsiloxane, etc...), les carbosilanes, etc...,
- les oxiranes tels que l'oxyde d'éthylène, l'oxyde de propylène, etc..., les esters cycliques tels que les lactones, les lactides, etc... les monomères comprenant du phosphore (polyphosphazène),
- les monomères comprenant du soufre (thiazyle, nitrure de soufre, etc...),
- les monomères comprenant du bore (borazylènes), et
- les mélanges de ces monomères.

La polymérisation de tels monomères est connue en soi. L'homme du métier saura adapter la technique de polymérisation en fonction du type de monomère à polymériser.

A titre préférentiel dans le cadre de l'invention, les monomères oléfiniques sont choisis parmi :
- l'éthylène,
- les α-oléfines, tels que le propylène, le 1-butène, l'isobutylène, le pentène, le méthylpentène, le 1-hexène, etc...,
- les diènes conjugués ou non
- les nitriles vinyliques, tels que l'acrylonitrile et le méthacrylonitrile,
- les esters acryliques dérivés de l'acide acrylique ou de l'acide méthacrylique avec des alcools ayant 1 à 20 atomes de carbone, de préférence ayant de 1 à 12 atomes de carbone, comme par exemple l'acide acrylique, l'acrylamide, l'acrylate de méthyle, l'acrylate d'éthyle, l'acrylate de propyle, l'acrylate de n-butyle, l'acrylate de iso-butyle, l'acrylate d'hexyle, l'acrylate de 2-éthylhexyle, l'acide méthacrylique, le méthacrylamide, le méthacrylate de méthyle, le méthacrylate d'éthyle, le méthacrylate de n-butyle, le méthacrylate d'iso-butyle, le méthacrylate d'hexyle, le méthacrylate de 2-éthylhexyle,
   - les esters acryliques porteurs d'un cycle époxy tels que les esters de glycidyle d'un acide acrylique ou d'acide méthacrylique, notamment le méthacrylate de glycidyle, l'acrylate de glycidyle, l'itaconate de glycidiyle,
- les monomères vinyliques et les monomères vinyles aromatiques, notamment ceux ayant de 8 à 20 atomes de carbone, comme par exemple le styrène, l'ortho-, méta-, para-méthylstyrène, le mélange commercial vinylmésitylène, le divinylbenzène, le vinylnaphtalène ainsi que les vinyle pyridines, les vinyle N-C1-C6-alkylepyrroles, les vinyle oxazoles, les vinyle thiazoles, les vinyle pyrimidines, les vinyle imidazoles, etc.,
- les esters vinyliques d'acides carboxyliques,
- les alcools vinyliques,
- les éthers vinyliques,
- et les mélanges de ces monomères.

Le polymère de départ peut avoir toute microstructure. Le polymère de départ peut être par exemple à blocs, statistique, séquencé, microséquencé, et être préparé en dispersion, en émulsion ou en solution ; il peut être étoilé, linéaire, téléchélique ou notamment couplé.

Selon l'un quelconque des modes de réalisation de l'invention, le polymère de départ est préférentiellement un élastomère, plus préférentiellement un élastomère diénique.

Par élastomère diénique, on entend un élastomère qui est issu au moins en partie (i.e. un homopolymère ou un copolymère) de monomères diènes conjugués ou non.

Selon l'un quelconque des modes de réalisation de l'invention, le polymère de départ est un homopolymère d'un monomère diénique conjugué ou non-conjugué. De préférence, un monomère diénique conjugué peut être le butadiène ou l'isoprène.

Selon l'un quelconque des modes de réalisation de l'invention, le polymère de départ est un copolymère d'au moins un premier monomère diénique conjugué ou non conjugué et d'au moins un deuxième monomère différent du premier monomère et choisi parmi l'éthylène, les α-oléfines, les diènes conjugués, les diènes non conjugués, les esters acryliques, les esters acryliques porteurs d'un cycle époxy, les monomères vinylique, les monomères vinyliques aromatiques, les nitriles vinyliques, les esters vinyliques d'acides carboxyliques, les alcools vinyliques et les éthers vinyliques.

Selon l'un quelconque des modes de réalisation de l'invention, le polymère de départ est un copolymère ternaire obtenu par copolymérisation d'un premier monomère esters acryliques porteurs d'un cycle époxy, d'un second monomère choisi parmi l'éthylène ou une α-oléfine, et un troisième monomère différent du second monomère choisi parmi l'éthylène, les α-oléfines, les diènes conjugués, les diènes non conjugués, les esters acryliques, les esters acryliques porteurs d'un cycle époxy, les monomères vinylique, les monomères vinyliques aromatiques, les nitriles vinyliques, les esters vinyliques d'acides carboxyliques, les alcools vinyliques et les éthers vinyliques.

On entend plus particulièrement par élastomère susceptible d'être utilisé dans l'invention:
(a) tout homopolymère obtenu par polymérisation d'un monomère diène conjugué ayant de 4 à 12 atomes de carbone, comme par exemple le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène;
(b) tout homopolymère obtenu par polymérisation d'un monomère diène non-conjugué ayant de 5 à 12 atomes de carbone, comme par exemple le 1,5-hexadiène, le 1,4-pentadiène;
(c) tout copolymère obtenu par copolymérisation d'un ou plusieurs des diènes conjugués ayant de 4 à 12 atomes de carbone, tels que définis ci-dessus, entre eux ou avec un ou plusieurs monomères mentionnés ci-dessous :
   - l'éthylène,
   - les composés vinylaromatiques ayant de 8 à 20 atomes de carbone, comme par exemple le styrène, l'ortho-, méta-, para-méthylstyrène, le mélange commercial vinylmésitylène, le divinylbenzène, le vinylnaphtalène,
   - les monomères nitriles vinyliques ayant 3 à 12 atomes de carbone, comme par exemple l'acrylonitrile, le méthacrylonitrile,
   - les alcools vinyliques ;
   - esters acryliques dérivés de l'acide acrylique ou de l'acide méthacrylique avec des alcools ayant 1 à 20 atomes de carbone, de préférence de ayant de 1 à 12 atomes de carbone, comme par exemple l'acide acrylique, l'acrylamide, l'acrylate de méthyle, l'acrylate d'éthyle, l'acrylate de propyle, l'acrylate de n-butyle, l'acrylate de iso-butyle, l'acrylate d'hexyle, l'acrylate de 2-éthylhexyle, l'acide méthacrylique, le méthacrylamide, le méthacrylate de méthyle, le méthacrylate d'éthyle, le méthacrylate de n-butyle, le méthacrylate de iso-butyle, le méthacrylate d'hexyle, le méthacrylate de 2-éthylhexyle,
   ces copolymères peuvent contenir entre 100% et 20% en poids d'unités diéniques et entre 0% et 80% en poids d'unités éthyléniques, vinylaromatiques, nitriles vinyliques, alcools vinyliques et/ou esters acryliques ;
(d) tout copolymère obtenu par copolymérisation d'un ou plusieurs des diènes non-conjugués ayant de 5 à 12 atomes de carbone, tels que définis ci-dessus, entre eux ou avec un ou plusieurs monomères mentionnés ci-dessous :
   - l'éthylène,
   - les composés vinylaromatiques ayant de 8 à 20 atomes de carbone, comme par exemple le styrène, l'ortho-, méta-, para-méthylstyrène, le mélange commercial vinylmésitylène, le divinylbenzène, le vinylnaphtalène,
   - les monomères nitriles vinyliques ayant 3 à 12 atomes de carbone, comme par exemple l'acrylonitrile, le méthacrylonitrile,
   - les alcools vinyliques ;
   - esters acryliques dérivés de l'acide acrylique ou de l'acide méthacrylique avec des alcools ayant 1 à 20 atomes de carbone, de préférence de ayant de 1 à 12 atomes de carbone, comme par exemple l'acide acrylique, l'acrylamide, l'acrylate de méthyle, l'acrylate d'éthyle, l'acrylate de propyle, l'acrylate de n-butyle, l'acrylate de iso-butyle, l'acrylate d'hexyle, l'acrylate de 2-éthylhexyle, l'acide méthacrylique, le méthacrylamide, le méthacrylate de méthyle, le méthacrylate d'éthyle, le méthacrylate de n-butyle, le méthacrylate de iso-butyle, le méthacrylate d'hexyle, le méthacrylate de 2-éthylhexyle ;
(e) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué tel que notamment l'hexadiène-1,4, le vinyl norbornène, l'éthylidène norbornène, le norbornadiène, le dicyclopentadiène; de tels polymères sont décrits en particulier dans les documents WO 2004/035639A1 et US 2005/0239639A1;
(f) un copolymère d'isobutène et d'isoprène (caoutchouc butyle), ainsi que les versions halogénées, en particulier chlorées ou bromées, de ce type de copolymère;
(g) un copolymère ternaire obtenu par copolymérisation d'un premier monomère porteur d'un cycle époxy tel que les esters acryliques porteurs d'un cycle époxy, par exemple les esters de glycidyle d'un acide acrylique ou méthacrylique, notamment le méthacrylate de glycidyle, l'acrylate de glycidyle, l'itaconate de glycidiyle, d'un second monomère choisi parmi l'éthylène ou une α-oléfine, et un troisième monomère différent du second monomère choisi parmi l'éthylène, les α-oléfine, l'acrylonitrile, le méthacrylonitrile, les acrylates, les méthacrylates, les esters vinyliques d'acides carboxyliques, les alcools vinyliques, les vinyles aromatiques, les éthers vinyliques.
(h) du caoutchouc naturel;
(i) un mélange de plusieurs des élastomères définis en (a) à (h) entre eux.

Selon un mode de réalisation préférentiel de l'invention, le polymère de départ peut être un élastomère diénique choisi dans le groupe constitué par les polybutadiènes, les polyisoprènes, les copolymères de butadiène, les copolymères d'isoprène et leurs mélanges. De tels copolymères sont plus préférentiellement choisis dans le groupe constitué par les copolymères de butadiène-styrène (SBR), que ces derniers soient préparés par polymérisation en émulsion (ESBR) comme en solution (SSBR), les copolymères d'isoprène-butadiène (BIR), les copolymères d'éthylène-butadiène, les copolymères d'isoprène-styrène (SIR) et les copolymères d'isoprène-butadiène-styrène (SBIR), les copolymères de butadiène et d'ester d'acide (méth)acrylique, les copolymères d'isoprène et d'ester d'acide (méth)acrylique, les copolymères de butadiène, de styrène et d'ester d'acide (méth)acrylique, les copolymères d'isoprène, de styrène et d'ester d'acide (méth)acrylique. De manière plus préférée, le polymère de départ est un polybutadiène.

Les élastomères diéniques utilisables selon l'invention peuvent être obtenus selon des techniques classiques de polymérisation bien connues de l'homme du métier. Les élastomères diéniques peuvent avoir toute microstructure qui est fonction des conditions de polymérisation utilisées, notamment de la présence ou non d'un agent modifiant et/ou randomisant et des quantités dudit agent employées. Les élastomères diéniques peuvent être par exemple à blocs, statistiques, séquencés, microséquencés, et être préparés en dispersion, en émulsion ou en solution. Les élastomères diéniques peuvent être linéaires, étoilés ou téléchéliques, de préférence linéaires.

Les élastomères diéniques utilisables selon l'invention peuvent être couplés et/ou étoilés de manière connue en soi, au moyen notamment d'agent de couplage et/ou d'étoilage à base de Si ou Sn.

Une caractéristique essentielle du polymère de départ, notamment de l'élastomère diénique, utile aux besoins du procédé de synthèse conforme à l'invention, est qu'il est porteur d'au moins une fonction nucléophile dans la chaîne polymère. A titre de fonctions nucléophiles selon l'invention, on peut citer la fonction hydroxyle de type alcool primaire, secondaire ou tertiaire, la fonction amine, primaire ou secondaire, ou encore la fonction thiol; avantageusement la fonction nucléophile est la fonction hydroxyle.

La synthèse de polymères porteurs d'au moins une fonction nucléophile dans la chaîne polymère est notamment accessible dans la littérature relative à la fonctionnalisation des polymères. La fonctionnalisation peut avoir lieu à tout moment de la synthèse du polymère de départ par divers moyens connus. Ainsi, la fonction nucléophile peut être introduite dans la structure du polymère de départ au moment de l'amorçage d'une polymérisation radicalaire ou anionique, lorsque l'amorceur de polymérisation est porteur de cette fonction nucléophile. La fonction sera portée en extrémité de chaîne à l'issue de la synthèse. La fonction nucléophile peut également être introduite en extrémité de chaîne d'un polymère par réaction d'un polymère vivant avec un agent de fonctionnalisation. La fonction nucléophile peut également être portée par un des monomères polymérisés. La fonction nucléophile peut encore être introduite par modification chimique post-polymérisation, par greffage radicalaire par exemple.

Selon un mode de réalisation avantageux de l'invention, l'introduction d'au moins une fonction hydroxyle terminale dans une chaîne polymère peut être facilement accessible en une étape de synthèse. Il existe deux principes de synthèse différents de polymère porteur d'au moins une fonction hydroxyle terminale, la polymérisation radicalaire et la polymérisation anionique. La fonction hydroxyle peut ainsi être apportée par un amorçage radicalaire en présence de H₂O₂. Par le biais de la polymérisation anionique en présence d'un initiateur de polymérisation mono- ou multi-fonctionnel, la fonction hydroxyle peut être obtenue par terminaison de la polymérisation en présence d'oxyde d'éthylène ou d'oxyde de propylène. Par « initiateur de polymérisation multifonctionnel », on entend un initiateur de polymérisation qui comprend plusieurs sites d'initiation de la polymérisation. Ces initiateurs sont bien connus de l'homme du métier et permettent d'obtenir des polymères en étoile.

Selon un autre mode de réalisation de l'invention, l'introduction de fonctions hydroxyle le long de la chaîne polymère peut être obtenue par exemple soit à partir de polymères comprenant au moins un cycle époxy dans leur chaîne polymère après réaction avec un hydrure, soit en polymérisant un monomère comprenant des fonctions alcool, tels que par exemple les monomères alcools vinyliques.

De tels polymères portant au moins une fonction hydroxyle terminale ou le long de la chaîne polymère et leurs procédés d'obtention sont bien connus de l'homme du métier. Certains polymères sont disponibles commercialement; ceci contribue à l'intérêt du procédé selon l'invention du fait de la disponibilité commerciale d'au moins un de ses réactants.

A titre d'exemple de polymères utiles aux besoins du procédé de synthèse conforme à l'invention en tant que polymères de départ portant au moins une fonction hydroxyle, on peut citer par exemple les polybutadiènes commerciaux « Krasol » de Cray Valley, en particulier le « Poly BD R45HTLO », « KRASOL LBH-P3000 » et le « KRASOL LBH 2000 ».

De la même manière, l'introduction d'au moins une fonction thiol terminale dans une chaîne polymère peut être facilement accessible en une étape de synthèse. La fonction thiol peut être obtenue par terminaison de la polymérisation anionique en présence de sulfure d'éthylène ou de sulfure de propylène. De tels polymères portant au moins une fonction thiol terminale et leurs procédés d'obtention sont bien connus de l'homme du métier.

Selon l'un quelconque des modes de réalisation de l'invention, le polymère de départ porte une ou plusieurs fonctions nucléophiles dans la chaîne polymère, plus particulièrement une ou plusieurs fonctions nucléophiles terminales. Plus particulièrement, le polymère de départ est un polymère linéaire portant à au moins une de ces extrémités de chaîne une fonction nucléophile, avantageusement une fonction hydroxyle. De manière encore plus préférée, le polymère de départ est un polymère linéaire portant à chacune de ses deux extrémités de la chaîne polymère une fonction nucléophile, avantageusement une fonction hydroxyle.

Le taux molaire de fonction nucléophile dans le polymère de départ utile pour les besoins du procédé de synthèse conforme à l'invention peut varier dans une large part et est ajustée selon les propriétés recherchées du polymère final conforme à l'invention, notamment selon l'usage qu'il en sera fait. Il est exprimé par rapport à 100 moles d'unités monomères constituant le polymère de départ. Le taux molaire de fonction nucléophile dans le polymère de départ peut être mesuré, par exemple, par RMN.

Selon un mode de réalisation le taux de fonctions nucléophiles terminales, de préférence de fonctions hydroxyle, est d'au moins 0,1 moles pour 100 moles d'unités monomères constituant le polymère de départ.

L'autre composé essentiel du procédé de synthèse de l'invention est un composé électrophile. Le composé électrophile est un composé porteur à la fois d'un groupe phosphonate et d'une fonction électrophile.

Par « fonction électrophile », on entend une entité présentant un site déficitaire en électron et qui présente une affinité pour toute fonction riche en électrons. Par exemple, une fonction électrophile peut être une fonction présentant une polarité δ+ ou une fonction qui présente une lacune électronique. Une fonction électrophile réagit en prenant des électrons à des composés nucléophiles pour former une liaison covalente.

La fonction électrophile est choisie dans le groupe constitué par la fonction halogénure d'acyle, la fonction chlorure d'acyle, la fonction acide carboxylique, la fonction ester et la fonction isocyanate. De manière plus préférée, la fonction électrophile est la fonction acide carboxylique.

La fonction électrophile est susceptible de réagir avec la fonction nucléophile du polymère de départ par substitution nucléophile, estérification, transestérification, etc....

On entend par « fonction halogénure d'acyle », le groupement -C(O)Hal, l'atome de carbone étant lié à un atome de carbone sp3 et Hal étant un atome d'halogène, de préférence un atome de chlore.

On entend par fonction « acide carboxylique », le groupement - COOH, l'atome de carbone étant lié à un autre atome de carbone sp3.

On entend par « fonction ester », le groupement -COOR, l'atome de carbone étant lié à un atome de carbone sp3.

On entend par « fonction isocyanate », le groupement - CNO, l'atome de carbone étant lié à un atome de carbone sp3.

Par « groupe phosphonate », on entend un groupe chimique de structure générique - P(O)(ORa)(ORb) dans lequel l'atome de phosphore est lié à un atome de carbone sp3 et dans lequel Ra et Rb, identiques ou différents, représentent un atome d'hydrogène ou une chaîne hydrocarbonée. Par abus de langage, le terme phosphonate englobe également un groupe phosphonique, c'est-à-dire que Ra et Rb sont identiques et sont un atome d'hydrogène. Le terme phosphonate englobe également les hemi-acide phosphonique, c'est-à-dire les groupes dans lequel au moins Ra ou Rb est un atome d'hydrogène.

Le composé électrophile porteur à la fois d'un groupe phosphonate et d'une fonction électrophile répond à la formule (I) suivante:

A-B-X (I)

dans laquelle :
- A représente une fonction électrophile choisie parmi la fonction halogénure, la fonction halogénure d'acyle, la fonction chlorure d'acyle, la fonction acide carboxylique, la fonction ester et la fonction isocyanate, de préférence la fonction acide carboxylique,
- B est un (C₁-C₂₄)alcanediyle formant une liaison entre A et X,
- X représente un groupe phosphonate -P(O)(OR₁)(OR₂) avec R₁ et R₂, identiques ou différents, et choisis parmi un atome d'hydrogène, une chaîne hydrocarbonée ayant de 1 à 6 atomes de carbone, de préférence de 1 à 4 atomes de carbone. De préférence, R₁ et R₂ sont identiques ou différent et sont choisis parmi un atome, d'hydrogène, le méthyle, l'éthyle, le propyle. De manière encore plus préférée, R₁ et R₂ sont identiques et représentent un atome d'hydrogène.

Le groupement B permet de relier le groupement A et le groupement X. De préférence, le groupement Best un (C₅-C₁₅)alcanediyle, de manière préférée un (C₈-C₁₂)alcanediyle, de manière encore plus préférée un décanediyle.

Par « (C₁-C₂₄)alcanediyle », on entend au sens de la présente invention, un groupe divalent de formule générale CₙH₂ₙ dérivé d'un alcane ayant entre 1 et 24 atomes de carbone. Le groupe divalent peut être linéaire ou ramifié et éventuellement être substitué. A titre d'exemples de (C₁-C₂₄)alcanediyle, on peut citer notamment un groupe méthylène -CH₂-, un groupe éthylène -CH₂-CH₂-, un groupe propylène -CH₂-CH₂-CH₂₋, un groupe butylène -CH₂-CH₂-CH₂-CH₂-, etc.

Selon des modes de réalisation particulièrement avantageux de l'invention, le composé électrophile répond à la formule (II) :

HOOC-CₙH₂ₙ-P(O)(OR₁)(OR₂) (II)

dans laquelle :
- n est un entier et va 5 à 15, de préférence n=10,
- R₁ et R₂, identiques ou différents représentent un atome d'hydrogène, une chaîne hydrocarbonée ayant de 1 à 6 atomes de carbone, de préférence de 1 à 4 atomes de carbone. De préférence, R₁ et R₂ sont identiques ou différent et sont choisis parmi un atome, d'hydrogène, le méthyle, l'éthyle, le propyle. De manière encore plus préférée, R₁ et R₂ sont identiques et représentent un atome d'hydrogène.

Selon ces modes de réalisation particulièrement avantageux, le composé électrophile répond plus préférentiellement à la formule (III):

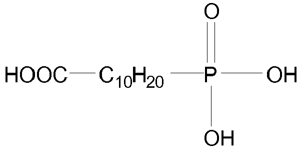

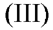

Les composés électrophiles utilisés dans le procédé conforme à l'invention sont disponibles commercialement auprès de Specific Polymer, ABCR ou Aldrich.

La réaction du polymère de départ avec le composé électrophile s'effectue généralement dans des conditions classiques des réactions de substitution nucléophile, d'estérification, de transestérification, ..., en masse ou en solution.

Selon des variantes de l'invention, selon lesquelles les polymères obtenus sont porteurs d'au moins un groupe phosphonate dans la chaîne polymère, à l'issue de la réaction entre le polymère de départ tel que défini ci-dessus et le composé électrophile tel que défini ci-dessus, ces fonctions phosphonates peuvent être avantageusement transformées par des méthodes connues de l'homme du métier, en partie ou en totalité en fonctions acide phosphonique (par exemple, par réaction avec TMSiBR/MeOH (trimethylsilylbromide/methanol)) ou en fonctions hémiacide phosphonique (par exemple, par réaction avec de l'iodure de sodium (NaI)).

L'homme du métier comprendra que la portée du procédé de l'invention s'étend également à la combinaison de certains modes de réalisation de l'invention, ainsi que certains aspects préférentiels, lorsqu'appropriée et envisageable. Le procédé de l'invention a également pour objet ces diverses combinaisons de caractéristiques.

Ainsi, selon un mode de réalisation préférentiel du procédé de l'invention, l'une au moins des conditions suivantes est remplies, plus préférentiellement toutes:
- le polymère de départ est un polymère linéaire portant une fonction nucléophile à chacune des deux extrémités de la chaîne polymère,
- la fonction nucléophile est une fonction hydroxyle,
- le polymère est un élastomère diénique, de préférence à base de butadiène,
- le composé électrophile répond à la formule (I) dans laquelle A représente la fonction acide carboxylique,
- le composé électrophile répond à la formule (I) dans laquelle B représente une chaîne hydrocarbonée divalente de 1 à 30 atomes, linéaire, ramifiée ou cyclique, interrompue éventuellement par au moins un hétéroatome, de préférence B représente un (C₅-C₁₅)alcanediyle, de manière plus préférée un (C₈-C₁₂)alcanediyle, de manière encore plus préférée un décanediyle,
- le composé électrophile répond à la formule (I) dans laquelle X représente un groupement acide phosphonique.

L'introduction selon l'invention de groupes phosphonate par une réaction post-polymérisation sur un polymère de départ portant au moins une fonction nucléophile dans la chaîne polymère, permet d'éviter les étapes de protection et déprotection nécessaires lorsqu'on termine la polymérisation anionique. En outre, le rendement élevé, qui peut atteindre au moins 90%, selon le type de réaction entre groupements électrophiles et nucléophiles, permet un parfait contrôle du taux de groupement fonctionnel introduit au sein de la chaîne polymère. Par ailleurs, le procédé de l'invention ne nécessite pas l'utilisation de catalyseurs coûteux.

Selon l'invention, la réaction du polymère de départ avec le composé électrophile conduit à la synthèse d'un polymère qui contient au moins un groupe phosphonate dans la chaîne polymère, de préférence plusieurs groupes phosphonate dans la chaîne polymère. Avantageusement la réaction du polymère de départ avec le composé électrophile conduit à la synthèse d'un polymère qui contient au moins un groupe phosphonate terminal, de préférence deux groupes phosphonate terminaux.

L'invention a également pour objet un polymère porteur d'au moins un groupe phosphonate, susceptible d'être obtenu par le procédé conforme à l'invention selon au moins l'un quelconque de ses modes de réalisation décrits précédemment. Le polymère conforme à l'invention peut être un élastomère, un polymère liquide ou un polymère thermoplastique. De préférence, le polymère conforme à l'invention est un élastomère, plus préférentiellement un élastomère diénique.

Le polymère conforme à l'invention comprend d'une part une chaîne principale dérivée d'un polymère portant la fonction nucléophile dans la chaîne polymère, d'autre part au moins un groupe dans la chaîne porteur du groupe phosphonate, lequel groupe phosphonate est relié à la chaîne principale par l'intermédiaire de groupement divalent résultant de la réaction de la fonction nucléophile avec la fonction électrophile du composé électrophile.

Selon l'un quelconque des modes de réalisation de l'invention, le taux de groupe phosphonate dans le polymère est d'au moins 0,1 moles et d'au plus 100 moles pour 100 moles d'unités monomères constituant le polymère conforme à l'invention, préférentiellement d'au plus 80 moles, encore plus préférentiellement ce taux varie de 0,1 à 50 moles, plus particulièrement de 0,1 à 20 moles pour 100 moles d'unités monomères constituant le polymère conforme à l'invention.

Selon l'un quelconque des modes de réalisation de l'invention, la chaîne principale du polymère conforme à l'invention contient de préférence des unités monomères choisis dans le groupe constitué par les unités éthylène, les unités α-oléfine, les unités diènes conjugués ou non, les unités (méth)acrylonitrile, les unités (méth)acrylate, les unités ester vinylique d'acides carboxyliques, les unités d'alcools vinyliques, les unités éther vinylique, tels que décrits plus haut. A titre d'unités α-oléfine, on peut citer les composés vinylaromatiques comme le styrène, et à titre de diènes, on peut citer les diènes conjugués comme le 1,3-butadiène et l'isoprène et les diènes non-conjugués.

Selon l'un quelconque des modes de réalisation de l'invention, le polymère conforme à l'invention répond par exemple à la formule (IV):

((X-D)ⱼ-Pol)ᵢ-Y (IV)

dans laquelle :
- Pol représente une chaîne polymère dérivée du polymère de départ,
- Y est un radical mono ou multivalent ou une liaison covalente,
- i est un nombre entier compris entre 1 et 12, de préférence entre 1 et 4,
- j représentant le nombre de groupe phosphonate dans la chaîne polymère Pol (c'est-à-dire à l'extrémité de la chaîne Pol et/ou réparti le long de la chaîne Pol) est un nombre entier supérieur ou égal à 1,
- D est un atome ou groupement d'atomes divalent permettant de relier de manière covalente la fonction X au reste de la chaîne polymère Pol et résultant de la réaction de la fonction nucléophile du polymère de départ avec la fonction électrophile A du composé électrophile,
- X est le groupe phosphonate tel que décrit précédemment.

Pol représente la chaîne polymérique dérivée du polymère de départ. Ce dernier est tel que décrit plus haut, englobant toutes ses variantes.

L'homme du métier comprendra que la chaîne principale du polymère conforme à l'invention peut comprendre des fonctions nucléophiles résiduelles. Le taux de ces fonctions nucléophiles résiduelles dépend notamment de la stœchiométrie des réactifs, en particulier de la quantité introduite dans le milieu réactionnel de composé électrophile relative au taux molaire de fonction nucléophile présente sur le polymère de départ. Les valeurs de i et de j dépendent du rendement de la réaction de greffage, du taux molaire de fonctions nucléophiles dans le polymère de départ, ainsi que de la quantité de composé électrophile, de la nature de l'initiateur de polymérisation. (i x j) un nombre au moins égal à 1, il est de préférence strictement supérieur à 1. Selon un mode de réalisation particulièrement préféré (i x j) est égal à 2.

D peut être le groupement divalent résultant de la réaction de la fonction nucléophile terminale avec une fonction électrophile par exemple choisie dans le groupe constitué par la fonction halogénure d'acyle, la fonction acide carboxylique, la fonction ester et la fonction isocyanate, de préférence la fonction acide carboxylique. L'homme du métier saura que D comprend également l'« espaceur » B du composé électrophile.

Selon un mode de réalisation avantageux de l'invention, D peut être le groupement divalent résultant de la réaction de la fonction hydroxyle terminale avec une fonction électrophile acide carboxylique et intégrant l'« espaceur » B.

Selon un mode de réalisation avantageux, X est un acide phosphonique.

Selon certaines variantes de l'invention, Y est un radical mono- ou multivalent résultant de la nature de l'initiateur de polymérisation anionique respectivement mono- ou multifonctionnel. Selon d'autres variantes de l'invention, Y est un radical mono- ou multivalent résultant d'une modification post-polymérisation du polymère, notamment par couplage ou étoilage.

Selon un mode de réalisation avantageux de l'invention, le polymère conforme à l'invention répond à la formule (V) :

X-D-Pol-D-X (V)

dans laquelle Pol, X et D sont tels que définis plus haut.

Plus particulièrement encore selon ce mode de réalisation, au moins l'une des conditions suivantes est remplie, de préférence toutes:
- Pol est un polybutadiène,
- X est un acide phosphonique,
- D est un groupement divalent dérivé d'un carboxylate de formule -B-C(O)O- ; B représente un groupe (C₅-C₁₅)alcanediyle, de préférence un groupe (C₈-C₁₂)alcanediyle, de préférence un décanediyle.

Les polymères porteurs d'un ou plusieurs groupe(s) phosphonate dans la chaîne polymère selon l'invention, peuvent être utilisés en tant que tel ou en mélanges avec un ou plusieurs autres composés. La présence de groupes phosphonate permet d'envisager une utilisation dans des applications similaires à celles des polymères modifiés en général, et des polymères porteurs de groupes phosphonate en particulier. Par exemple, il est connu pour l'optimisation des interactions entre un élastomère diénique et une charge renforçante au sein d'une composition de caoutchouc, de modifier la nature des élastomères diéniques afin d'y introduire des groupes fonctionnels. Ainsi, la structure particulière du polymère porteur d'un ou plusieurs groupe(s) phosphonate selon l'invention permet d'envisager son utilisation dans la fabrication de divers produits à base de caoutchouc renforcé lorsque le polymère est un élastomère diénique, notamment en vue d'améliorer la dispersion de la charge au sein de la matrice élastomère.

Un autre objet de l'invention est donc une composition de caoutchouc à base d'au moins une charge renforçante et au moins un polymère conforme à l'invention, notamment qui est préférentiellement un élastomère, plus préférentiellement un élastomère diénique.

Par « composition de caoutchouc à base de », il faut entendre une composition de caoutchouc comportant le mélange et/ou le produit de réaction des différents constituants utilisés, certains de ces constituants de base étant susceptibles de, ou destinés à réagir entre eux, aux moins en partie, lors des différentes phases de fabrication de la composition, en particulier au cours de sa réticulation ou vulcanisation.

L'élastomère diénique portant un ou plusieurs groupe(s) phosphonate dans la chaîne polymère conforme à l'invention peut etre alors plus particulièrement choisi parmi les polybutadiènes, les polyisoprènes, les copolymères de butadiène, les copolymères d'isoprène, ainsi que leurs mélanges. A titre d'élastomère diénique conviennent par exemple les SBR, les BIR, les SIR, les SBIR, les copolymères d'éthylène-butadiène, les copolymères de butadiène et d'ester d'acide (méth)acrylique, les copolymères d'isoprène et d'ester d'acide (méth)acrylique, les copolymères de butadiène, de styrène et d'ester d'acide (méth)acrylique, les copolymères d'isoprène, de styrène et d'ester d'acide (méth)acrylique. De manière plus préférée, l'élastomère diénique portant un ou plusieurs groupe(s) phosphonate dans la chaîne polymère conforme à l'invention est un polybutadiène.

La composition de caoutchouc conforme à l'invention a pour caractéristique de comprendre au moins une charge renforçante par exemple du noir de carbone, une charge renforçante autre que du noir de carbone, notamment de type siliceuse telle que de la silice à laquelle est associé de manière connue un agent de couplage, ou encore un mélange de ces deux types de charge.

Selon des variantes de l'invention, la composition peut, outre le polymère conforme à l'invention, comprendre au moins un deuxième élastomère diénique.

Comme deuxième élastomère diénique conviennent plus particulièrement le caoutchouc naturel, les polybutadiènes (BR), les copolymères de butadiène, les polyisoprènes (IR), les copolymères d'éthylène-butadiène, les copolymères d'isoprène et les mélanges de ces élastomères. De tels copolymères sont plus préférentiellement choisis dans le groupe constitué par les copolymères de butadiène et d'un monomère vinylaromatique, plus particulièrement le copolymère de butadiène-styrène (SBR), les copolymères d'isoprène-butadiène (BIR), les copolymères d'isoprène et d'un monomère vinylaromatique, plus particulièrement le copolymère d'isoprène-styrène (SIR) et les copolymères d'isoprène-butadiène-styrène (SBIR).

Le deuxième élastomère diénique peut être étoilé, couplé, fonctionnalisé ou non, de manière connue en soi, au moyen d'agents de fonctionnalisation, de couplage ou d'étoilage connus de l'homme de l'art.

Les compositions de caoutchouc conformes à l'invention peuvent comporter également tout ou partie des additifs usuels habituellement utilisés dans les compositions d'élastomères destinées à la fabrication de pneumatiques, comme par exemple des pigments, des agents de protection, des agents anti-fatigue, des plastifiants, des résines renforçantes, des donneurs de méthylène (par exemple HMT ou H3M), un système de réticulation et les mélanges de tels composés.

La fabrication des compositions de caoutchouc conformes à l'invention est bien connue de l'homme du métier. Les composés mentionnés ci-dessus et entrant dans la préparation de compositions de caoutchouc peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges....

Dans le domaine des pneumatiques, notamment pour véhicules, l'utilisation d'une telle composition de caoutchouc est particulièrement appropriée. C'est pourquoi un article semi-fini, tel qu'une bande de roulement ou un flanc, et un pneumatique dont au moins un de ces éléments constitutifs comprend au moins une composition de caoutchouc à base d'au moins un élastomère diénique portant un ou plusieurs groupe(s) phosphonate dans la chaîne polymère conforme à l'invention constituent également des objets de l'invention.

Les caractéristiques précitées de la présente invention, ainsi que d'autres, seront mieux comprises à la lecture de la description suivante de plusieurs exemples de réalisation de l'invention, donnés à titre illustratif et non limitatif.

### II - EXEMPLES DE REALISATION DE L'INVENTION :

### II.1-Mesures utilisées :

### II.1.1-Résonance Magnétique Nucléaire (RMN) :

Les déterminations des taux des différentes unités monomères et de leurs microstructures et des taux de fonctions portées au sein du copolymère sont réalisées par une analyse RMN. Les analyses RMN ¹H sont réalisées avec un Spectromètre Bruker Avance 300 (300 MHz), sonde QNP 1H, 31P, 19F et 13C. Les échantillons sont solubilisés dans le chloroforme deutéré (CDCl3).

### II.1.2-Chromatographie d'exclusion stérique (SEC) :

On utilise la chromatographie d'exclusion stérique ou SEC (Size Exclusion Chromatography). La SEC permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité ou polydispersité (Ip = Mw/Mn) calculé via un étalonnage dit de MOORE.

Préparation du polymère: il n'y a pas de traitement particulier de l'échantillon de polymère avant analyse. Celui-ci est simplement solubilisé, dans du tétrahydrofurane à une concentration d'environ 1 g/l. Puis la solution est filtrée sur filtre de porosité 0,45µm avant injection.

Analyse SEC: les analyses SEC sont réalisées sur PL-GPC 50 VARIAN avec détecteur RI et système de colonne polypore. Débit : 1mL/min ; Solvant d'élution: THF ; Température du système : 35°C. Les masses molaires moyennes en nombre calculées sont relatives à une courbe d'étalonnage réalisée à partir d'étalons commerciaux polystyrène.

### II.2-Préparation de polymères portant des groupements acide phosphonique terminaux :

### Exemple 1 : Estérification du Krasol LBH-P 3000 par l'acide 10-carboxyldecyl phosphonique

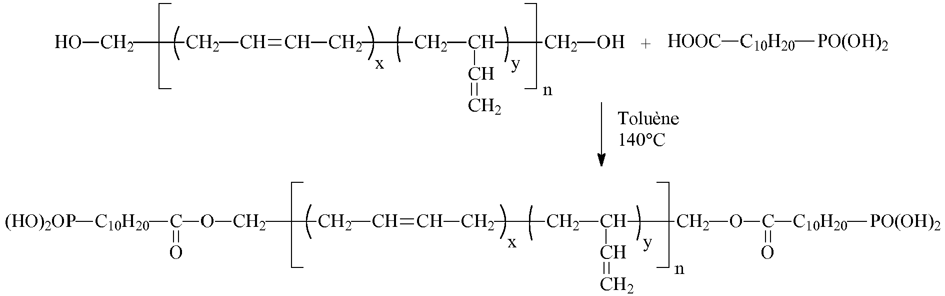

Dans un ballon monocol sont introduits 25.0 g de Krasol LBH-P 3000, 4.4 g (2.1 eq) d'acide 10-carboxyldecyl phosphonique commercialisé par Specific Polymers et 300 mL de toluène. Le ballon est équipé d'un Dean-Stark, puis le mélange est placé sous agitation à 140°C pendant 48 heures. La réaction d'estérification est auto-catalysée par l'acide phosphonique.

En fin de réaction, le polybutadiène téléchélique est coagulé dans 2L de méthanol. Les résidus de solvants sont éliminés par étuvage à 60°C pendant 4h.

Le produit final est un liquide visqueux translucide obtenu avec un rendement de 80%.

Le spectre RMN¹H permet de confirmer la structure du polybutadiène fonctionnalisé par intégration de signaux caractéristiques des protons 1 à 6 qui apparaissent sous forme de massifs :

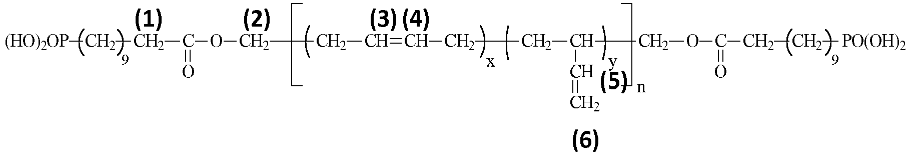

| Proton N° | Déplacement chimique (ppm) | Nombre de protons |
|---|---|---|
| H1 | 2.2 - 2.3 | 2 |
| H2 | 3.9 - 4.1 | 2 |
| H6 | 4.8 - 5.1 | 2 |
| H3 H4 H5 | 5.2 - 5.8 | 3 |

Le spectre RMN³¹P dans le CDCl₃ fait apparaître un signal large à 38.2 ppm correspondant aux acides phosphoniques greffés.

La composition molaire du polybutadiène est la suivante : 35% mol de double liaison 1-4 et 65% mol de double liaison 1-2. La masse molaire moyenne en nombre du polybutadiène est de 3730 g/mol. L'indice de fonction « acide phosphonique » est de 0.52 meq / g ; il y a environ 1.95 fonction par chaîne.

### Exemple 2: Estérification du PolyBd R45-HTLO par l'acide 10-carboxyldecyl phosphonique

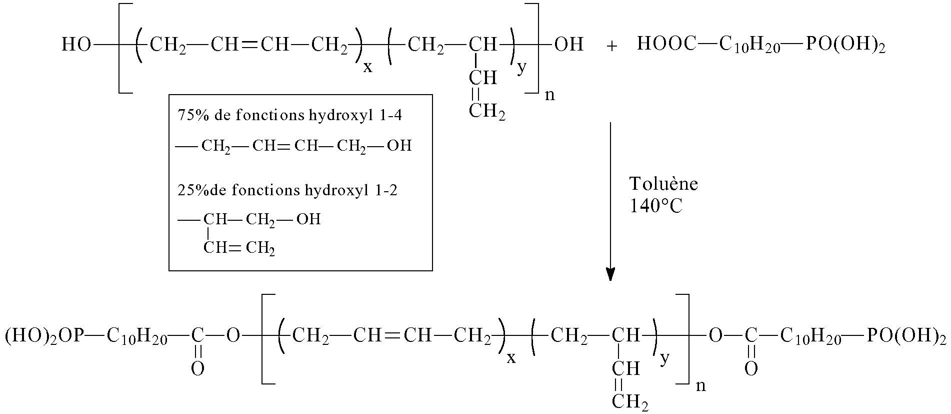

Dans un ballon monocol sont introduits 25.0 g de PolyBd R45-HTLO, 6.3 g (2.1 eq) d'acide 10-carboxyldecyl phosphonique commercialisé par Specific Polymers et 300 mL de toluène. Le ballon est équipé d'un Dean-Stark, puis le mélange est placé sous agitation à 140°C pendant 48h. La réaction d'estérification est auto-catalysée par l'acide phosphonique.

En fin de réaction, le polybutadiène téléchélique est coagulé dans 2L de méthanol. Les résidus de solvants sont éliminés par étuvage à 60°C pendant 4h.

Le produit final est un liquide visqueux jaune translucide obtenu avec un rendement de 75%.

Le spectre RMN¹H permet de confirmer la structure du polybutadiène fonctionnalisé par intégration de signaux caractéristiques des protons 1 à 6 qui apparaissent sous forme de massifs :

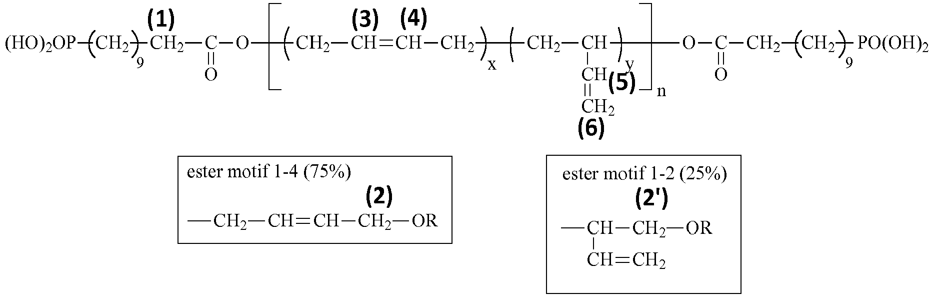

| Proton N° | Déplacement chimique (ppm) | Nombre de protons |
|---|---|---|
| H1 | 2.2 - 2.3 | 2 |
| H2' | 3.9 - 4.1 | 2 |
| H2 | 4.4 - 4.7 | 2 |
| H6 | 4.9 - 5.2 | 2 |
| H3 H4 H5 | 5.3 - 5.9 | 3 |

Le spectre RMN³¹P dans le CDCl₃ fait apparaître un signal large à 38.1 ppm correspondant aux acides phosphoniques greffés.

La composition molaire du polybutadiène est la suivante : 60% mol de double liaison 1-4 trans, 20% mol de double liaison 1-4 cis et 20% mol de double liaison 1-2. La masse molaire moyenne en nombre du polybutadiène est de 3420 g/mol. L'indice de fonction « acide phosphonique » est de 0.44 meq / g ; il y a environ 1.5 fonction par chaîne.

## Revendications

1. Procédé de synthèse d'un polymère portant au moins un groupe phosphonate dans la chaîne polymère, ledit procédé comprenant au moins la réaction d'un polymère de départ porteur d'au moins d'une fonction nucléophile dans la chaîne polymère avec au moins un composé électrophile porteur à la fois d'un groupe phosphonate et d'une fonction électrophile, **caractérisé en ce que** le composé électrophile porteur à la fois d'un groupe phosphonate et d'une fonction électrophile a pour formule générale (I)
A-B-X (I)
dans laquelle :
- A représente une fonction électrophile choisie parmi la fonction halogénure, la fonction halogénure d'acyle, la fonction chlorure d'acyle, la fonction acide carboxylique, la fonction ester et la fonction isocyanate,
- B est un espaceur représentant est un (C₁-C₂₄)alcanediyle.,
- X représente un groupe phosphonate -P(O)(OR₁)(OR₂) avec R₁ et R₂, identiques ou différents, et choisis parmi un atome d'hydrogène, une chaîne hydrocarbonée ayant de 1 à 6 atomes de carbone.

2. Procédé selon la revendication 1, **caractérisé en ce que** la fonction électrophile A est la fonction acide carboxylique.

3. Procédé selon la revendication 2, **caractérisé en ce que** le composé électrophile porteur à la fois d'un groupe phosphonate et d'une fonction électrophile répond à la formule (II) :
HOOC-CₙH₂ₙ-P(O)(OR₁)(OR₂) (II)
dans laquelle :
- n est un entier et va 5 à 15, de préférence n=10 ;
- R₁ et R₂, identiques ou différents représentent un atome d'hydrogène, une chaîne hydrocarbonée ayant de 1 à 6 atomes de carbone ; de préférence R₁ et R₂ sont identiques ou différents et sont choisi parmi l'atome d'hydrogène, le groupe méthyle, le groupe éthyle et le groupe propyle.

4. Procédé selon l'une quelconque des revendications 1 à 3, **caractérisé en ce que** le polymère de départ est un polymère linéaire, un polymère étoilé ou un polymère téléchélique.

5. Procédé selon la revendication 4, **caractérisé en ce que** le polymère de départ est un polymère linéaire portant une fonction nucléophile à au moins une de ses extrémités de chaîne.

6. Procédé selon la revendication 5, **caractérisé en ce que** le polymère de départ est un polymère linaire portant une fonction nucléophile à chacune de ses deux extrémités de chaîne.

7. Procédé selon l'une des revendications 1 à 6, **caractérisé en ce que** la fonction nucléophile du polymère de départ est choisi parmi la fonction hydroxyle -OH, la fonction amine -NH₂, la fonction thiol -SH, de préférence est la fonction hydroxyle -OH.

8. Procédé selon l'une quelconque des revendications 1 à 7, **caractérisé en ce que** le polymère de départ est un élastomère.

9. Procédé selon la revendication 8, **caractérisé en ce que** le polymère de départ est un élastomère diénique de butadiène ou un élastomère diénique d'isoprène.

10. Polymère portant au moins un groupe phosphonate dans sa chaîne polymère susceptible d'être obtenu par le procédé défini selon l'une quelconque des revendications 1 à 9.

11. Polymère selon la revendication 10, **caractérisé en ce qu'**il est choisi parmi les polybutadiènes, les polysioprènes, les copolymères de butadiène, les copolymères d'isoprène et leurs mélanges.

12. Composition de caoutchouc à base d'au moins une charge renforçante et d'au moins un polymère défini selon l'une des revendications 10 ou 11.

13. Article semi-fini en caoutchouc pour pneumatique, **caractérisé en ce qu'**il comprend au moins une composition de caoutchouc réticulable ou réticulée définie selon la revendication 12.

14. Pneumatique, **caractérisé en ce qu'**il comporte au moins un article semi-fini défini selon la revendication 13.

## Patentansprüche

1. Verfahren zur Synthese eines Polymers, das mindestens eine Phosphonatgruppe in der Polymerkette trägt, wobei das Verfahren mindestens die Umsetzung eines Ausgangspolymers, die mindestens eine nucleophile Funktion in der Polymerkette trägt, mit mindestens einer elektrophilen Verbindung, die sowohl eine Phosphonatgruppe als auch eine elektrophile Funktion trägt, umfasst, **dadurch gekennzeichnet, dass** die elektrophile Verbindung, die sowohl eine Phosphonatgruppe als auch eine elektrophile Funktion trägt, die allgemeine Formel (I) aufweist:
A-B-X (I)
in der:
- A für eine elektrophile Funktion steht, die aus der Halogenidfunktion, der Acylhalogenidfunktion, der Acylchloridfunktion, der Carbonsäurefunktion, der Esterfunktion und der Isocyanatfunktion ausgewählt ist,
- B ein Spacer ist, bei dem es sich um ein (C₁-C₂₄)-Alkandiyl handelt,
- X für eine Phosphonatgruppe -P(O)(OR₁)(OR₂) steht, wobei R₁ und R₂ gleich oder verschieden sind und aus einem Wasserstoffatom oder einer Kohlenwasserstoffkette mit 1 bis 6 Kohlenstoffatomen ausgewählt sind.

2. Verfahren nach Anspruch 1, **dadurch gekennzeichnet, dass** es sich bei der elektrophilen Funktion A um die Carbonsäurefunktion handelt.

3. Verfahren nach Anspruch 2, **dadurch gekennzeichnet, dass** die elektrophile Verbindung, die sowohl eine Phosphonatgruppe als auch eine elektrophile Funktion trägt, der Formel (II) entspricht:
HOOC-CₙH₂ₙ-P(O)(OR₁)(OR₂) (II)
in der:
- n eine ganze Zahl ist und im Bereich von 5 bis 15 liegt, vorzugsweise n = 10;
- R₁ und R₂ gleich oder verschieden sind und für ein Wasserstoffatom oder eine Kohlenwasserstoffkette mit 1 bis 6 Kohlenstoffatomen stehen; vorzugsweise R₁ und R₂ gleich oder verschieden sind und aus dem Wasserstoffatom, der Methylgruppe, der Ethylgruppe und der Propylgruppe ausgewählt sind.

4. Verfahren nach einem der Ansprüche 1 bis 3, **dadurch gekennzeichnet, dass** es sich bei dem Ausgangspolymer um ein lineares Polymer, ein Sternpolymer oder ein telecheles Polymer handelt.

5. Verfahren nach Anspruch 4, **dadurch gekennzeichnet, dass** es sich bei dem Ausgangspolymer um ein lineares Polymer handelt, das an mindestens einem seiner Kettenenden eine nucleophile Funktion trägt.

6. Verfahren nach Anspruch 5, **dadurch gekennzeichnet, dass** es sich bei dem Ausgangspolymer um ein lineares Polymer handelt, das an jedem seiner beiden Kettenenden eine nucleophile Funktion trägt.

7. Verfahren nach einem der Ansprüche 1 bis 6, **dadurch gekennzeichnet, dass** die nucleophile Funktion des Ausgangspolymers aus der Hydroxylfunktion -OH, der Aminfunktion -NH₂ und der Thiolfunktion -SH ausgewählt ist und vorzugsweise die Hydroxylfunktion -OH ist.

8. Verfahren nach einem der Ansprüche 1 bis 7, **dadurch gekennzeichnet, dass** es sich bei dem Ausgangspolymer um ein Elastomer handelt.

9. Verfahren nach Anspruch 8, **dadurch gekennzeichnet, dass** es sich bei dem Ausgangspolymer um ein Butadien-Dienelastomer oder Isopren-Dienelastomer handelt.

10. Polymer, das mindestens eine Phosphonatgruppe in seiner Polymerkette trägt, erhältlich durch das Verfahren gemäß einem der Ansprüche 1 bis 9.

11. Polymer nach Anspruch 10, **dadurch gekennzeichnet, dass** es aus Polybutadienen, Polyisoprenen, Butadien-Copolymeren, Isopren-Copolymeren und Mischungen davon ausgewählt ist.

12. Kautschukzusammensetzung auf Basis von mindestens einem verstärkenden Füllstoff und mindestens einem Polymer gemäß einem der Ansprüche 10 oder 11.

13. Kautschuk-Halbzeug für Reifen, **dadurch gekennzeichnet, dass** es mindestens eine vernetzbare oder vernetzte Kautschukzusammensetzung gemäß Anspruch 12 umfasst.

14. Reifen, **dadurch gekennzeichnet, dass** er mindestens ein Halbzeug gemäß Anspruch 13 umfasst.

## Claims

1. Process for synthesizing a polymer bearing at least one phosphonate group in the polymer chain, said process comprising at least the reaction of a starting polymer bearing at least one nucleophilic function in the polymer chain with at least one electrophilic compound bearing both a phosphonate group and an electrophilic function **characterized in that** the electrophilic compound bearing both a phosphonate group and an electrophilic function has the general formula (I)
A-B-X (I)
in which:
- A represents an electrophilic function selected from the halide function, the acyl halide function, the acyl chloride function, the carboxylic acid function, the ester function and the isocyanate function,
- B is a spacer representing a (C₁-C₂₄)alkanediyl,
- X represents a phosphonate group -P(O)(OR₁)(OR₂) with R₁ and R₂ being identical or different and selected from a hydrogen atom or a hydrocarbon-based chain having from 1 to 6 carbon atoms.

2. Process according to Claim 1, **characterized in that** the electrophilic function A is the carboxylic acid function.

3. Process according to Claim 2, **characterized in that** the electrophilic compound bearing both a phosphonate group and an electrophilic function corresponds to the formula (II):
HOOC-CₙH₂ₙ-P(O)(OR₁)(OR₂) (II)
in which:
- n is an integer and ranges from 5 to 15, preferably n = 10;
- R₁ and R₂, which are identical or different, represent a hydrogen atom, a hydrocarbon-based chain having from 1 to 6 carbon atoms; preferably R₁ and R₂ are identical or different and are selected from the hydrogen atom, the methyl group, the ethyl group and the propyl group.

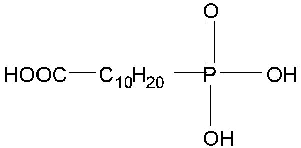

4. Process according to any one of Claims 1 to 3, **characterized in that** the starting polymer is a linear polymer, a star-branched polymer or a telechelic polymer.

5. Process according to Claim 4, **characterized in that** the starting polymer is a linear polymer bearing a nucleophilic function at at least one of its chain ends.

6. Process according to Claim 5, **characterized in that** the starting polymer is a linear polymer bearing a nucleophilic function at each of its two chain ends.

7. Process according to one of Claims 1 to 6, **characterized in that** the nucleophilic function of the starting polymer is selected from the hydroxyl function -OH, the amine function -NH₂, the thiol function -SH, and is preferably the hydroxyl function -OH.

8. Process according to any one of Claims 1 to 7, **characterized in that** the starting polymer is an elastomer,

9. Process according to Claim 8, **characterized in that** the starting polymer is a diene elastomer of butadiene or a diene elastomer of isoprene.

10. Polymer bearing at least one phosphonate group in its polymer chain, capable of being obtained by the process defined according to any one of Claims 1 to 9.

11. Polymer according to Claim 10, **characterized in that** it is selected from polybutadienes, polyisoprenes, butadiene copolymers, isoprene copolymers and mixtures thereof.

12. Rubber composition based on at least one reinforcing filler and on at least one polymer defined according to either of Claims 10 and 11

13. Semi-finished article made of rubber for a tire, **characterized in that** it comprises at least one crosslinkable or crosslinked rubber composition defined according to Claim 12.

14. Tire **characterized in that** it comprises at least one semi-finished article defined according to Claim 13.
